# EUROPEAN PATENT APPLICATION

(11) **EP 0 657 799 A1**
(43) Date of publication of application: **14.06.1995**
(21) Application number: 94307409.6
(22) Date of filing: 10.10.1994
(51) Int. Cl.: G06F 3/033

(54) **Graphical user interface for binder notebook control**

(30) Priority: 13.12.1993 US 166569
(71) Applicant: International Business Machines Corporation, Armonk, N.Y. 10504 (US)
(72) Inventor: Glaser, Howard Justin, San Jose, California 95120 (US); Leung, Tony Kai-Chi, San Jose, California 95123 (US)
(74) Representative: Williams, Julian David

(57) **Abstract**

A computer system includes a graphical user interface that provides a window display of a notebook metaphor having sheets that are bound together by notebook rings that can be opened and closed to permit adding, removing, and changing the order of the notebook sheets. The contents of the notebook metaphor are displayed as a stack of sheets. The notebook metaphor display includes a page-forward icon, a page-backward icon, and a page-release icon. User interaction with the page-forward icon is responded to by displaying a next sheet of the open notebook, user interaction with the page-backward icon is responded to by displaying a previous sheet of the open notebook, and user interaction with the page-release icon is responded to by displaying opened notebook rings. When the notebook rings are opened, the user is permitted to hold the top sheet of the stacked sheets and move it about in the window display. In this way, the interface in accordance with the invention permits a user to directly manipulate the sheets in the notebook metaphor.

## Description

The present invention relates to a computer system/user interface having structured data objects displayed as object metaphors that can be manipulated by the user.

A graphical user interface (GUI) is a type of computer system/user interface that provides structured data objects displayed as icons or object metaphors that can be controlled by users to manipulate the underlying data objects and initiate system actions. The object metaphors are displayed on a workstation display device and are manipulated with a workstation keyboard and an input device, such as a track ball or mouse device. A GUI provides a more efficient, user-friendly interface with which a user can operate a computer system workstation. A GUI also permits many applications to share the workstation display screen and thereby permits a user to easily move and share data between multiple applications or data structures.

The movement and sharing of data between applications and data structures is possible because the GUI provides a blank area display called a desktop, in which are displayed one or more working areas called windows. Data entered by the user, as well as icons or object metaphors, can be displayed in the windows and can be manipulated by the user. In general, each window has several icons with which a user can interact to manipulate and change the display and to initiate system actions. The size of the windows can be expanded so that one window fills the desktop or can be reduced so that several windows can be simultaneously displayed on the desktop. Windows can be closed and opened to gain access to applications and data.

A common type of GUI provides a window display representing readily identifiable office object metaphors that a user can manipulate after the user has designated the metaphor by moving a display cursor over the metaphor with a display mouse device and then pressing or "clicking" a display mouse device button. For example, in a GUI, a file folder metaphor (a two-dimensional representation of a file folder) can represent a data object containing one or more documents. A user can open the file folder metaphor and display its contents, which can be document data objects represented by document icons, by moving the display cursor over the file folder metaphor and clicking the mouse button while the cursor is positioned over the metaphor. The computer system responds to the button clicking on the file folder by changing the file folder metaphor, such as by replacing the working area of the window with a display of the first page of the subject document.

One type of GUI provides a display of a bound notebook or personal organizer metaphor having index tabs and pages. The window in which the notebook metaphor is displayed includes a title bar identifying the notebook, a window frame, a window menu icon, a window sizing icon, window scroll icons, and a work area. The work area contains a display of tabbed notebook page metaphors. That is, the work area contains a representation of stacked sheets in a notebook and some of the sheets are tabbed, usually with an alphabetical indexing or a calendar date indexing. The window also includes page-forward and page-backward icons to permit the user to move forward and backward, respectively, in the notebook and view different notebook sheets. The user can "turn" pages until the desired indexed area is reached and then can enter information in the sheets of the notebook. The indexing tabs thereby serve to organize the information.

The notebook metaphor is a convenient way to store and organize a variety of information useful to a user, such as names and addresses, notes, reminders, appointments, and the like. The notebook metaphor, with sheets of paper and page turning functions, provides easy identification and selection of pages for viewing. Unfortunately, conventional notebook metaphors do not permit a user to directly manipulate the order of pages, add pages from another notebook, or remove pages to another notebook. This prevents easy sharing of data between applications, data objects, and users. Data to be shared must be entered into each notebook that is to share the data, or multiple manipulations must be carried out. This reduces the convenience and user-friendly benefits otherwise provided by the GUI.

From the discussion above, it should be apparent that there is a need for a graphical user interface that permits direct manipulation of sheets in a notebook, including adding, removing, and changing the order of sheets in the notebook. The present invention satisfies this need.

In accordance with the present invention, there is now provided a method of providing a graphical user interface in a computer workstation system having a workstation central processor unit, a display device that displays objects that can be viewed by a workstation user, and a user-operable display pointing means for interacting with a displayed object of the display device, the method comprising: displaying a notebook window of the display device, the notebook window having a notebook binder metaphor that includes at least one visible notebook page, a notebook spine having at least one page-holding notebook ring that is displayed in either an open state or a closed state, a page-forward icon, a page-backward icon, and a page-release icon; responding to workstation user interaction of the display pointing means with the page-forward icon by displaying a next page of the notebook binder metaphor; responding to workstation user interaction of the display pointing means with the page-backward icon by displaying a previous page of the notebook binder metaphor; responding to workstation user interaction of the display pointing means with the page-release icon by changing the state of the displayed notebook ring; responding to workstation user interaction of the display pointing means with the top visible page of the notebook binder metaphor by permitting the workstation user to drag the page to a new position in the notebook window; and displaying a new top visible page in the notebook binder metaphor when the workstation user has dragged the top visible page to the new position.

Viewing the present invention from another aspect, there is now provided a computer system comprising: a workstation central processor unit; a display device that can be viewed by a workstation user; mouse means for interacting with a displayed object metaphor of the display device; a graphical user interface that displays a notebook window containing a notebook binder metaphor on the display device, such that the notebook binder metaphor includes at least one visible notebook page, a notebook spine having at least one page-holding notebook ring that is displayed in either an open state or a closed state, a page-forward icon, a page-backward icon, and a page-release icon; wherein the graphical user interface responds to workstation user interaction with the page-forward icon by displaying a next page of the notebook binder metaphor, responds to workstation user interaction with the page-backward icon by displaying a previous page of the notebook binder metaphor, responds to workstation user interaction with the page-release icon by changing the state of the displayed notebook ring, and responds to workstation user interaction with the top visible page of the notebook binder metaphor by permitting the workstation user to drag the page to a new position in the notebook window and displays a new top visible page in the notebook binder metaphor.

In a preferred embodiment of the present invention, there is provided a graphical computer system/user interface provides a window display of a notebook metaphor having pages that are bound together by notebook rings that can be opened and closed to permit adding, removing, and changing the order of the notebook pages. In the notebook metaphor, the contents of the notebook are displayed as a stack of pages and the window display includes a page-forward icon, a page-backward icon, and a page-release icon. User interaction with the page-forward icon is responded to by displaying a next page of the notebook, user interaction with the page-backward icon is responded to by displaying a previous page of the notebook, and user interaction with the page-release icon is responded to by changing the notebook metaphor to toggle between open and closed notebook rings. When the notebook rings are open, the user is permitted to lift the top page of the stacked pages out of the notebook and drag it about in the window display. The page can be left on the window display desktop, moved to another notebook metaphor, or placed elsewhere in the same notebook. In this way, the interface in accordance with the invention permits a user to directly manipulate the pages in the notebook metaphor.

In a particularly preferred embodiment of the present invention, the page-release icon is provided by a notebook ring release tab of the notebook metaphor, whose function is readily identifiable from common knowledge of multiple-ring notebooks. In particular, using a conventional display mouse device of the computer system to click on the release tab changes the notebook metaphor so that the rings are toggled between open and closed states. In the open state, the top page of the notebook can be moved about within the window and across the desktop of the display by the user, with the aid of the display mouse device, in a manner known to those skilled in the art. In the closed state, the notebook pages can be turned.

In an especially preferred embodiment of the present invention, the GUI can display multiple window areas each containing a notebook metaphor. Each notebook metaphor has associated page-forward, page-backward, and page-release icons that permit adding, removing, and changing the order of pages within a single displayed notebook metaphor and between all of the displayed notebook metaphors. In this way, the interface provided in accordance with the invention permits sharing of data between applications, data objects, and users.

Other features and advantages of the present invention should be apparent from the following description of the preferred embodiments, which illustrate, by way of example, the principles of the invention.

A preferred embodiment of the present invention will now be described with reference to the accompanying drawings, in which:
Figs. 1, 2, 3, 4, 5, 6, 7, and 8 are representations of single notebook displays generated by a computing system constructed in accordance with the present invention;
Fig. 9 is a block diagram of a computing system constructed in accordance with the present invention;
Fig. 10 is a representation of a page table maintained by the system illustrated in Fig. 9;
Figs. 11, 12, 13, 14, and 15 are representations of multiple notebook displays generated by the computing system illustrated in Fig. 9; and
Figs. 16 and 17 are flow diagrams of processing steps carried out by the computing system illustrated in Fig. 9.

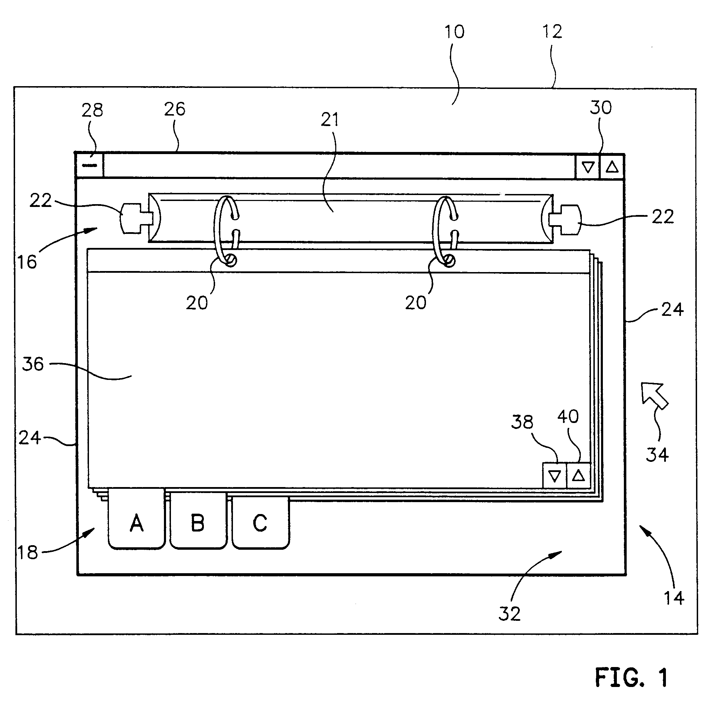

Fig. 1 shows a desktop display 10 generated on a user-operable workstation display device 12 by the graphical user interface provided in accordance with the present invention. The Fig. 1 display shows a notebook binder display window 14 in which is displayed a notebook binder metaphor 16 having tabbed pages 18 'tacked and held in sequence by rings 20 of the notebook binder. The notebook metaphor includes a notebook spine 21 and two release tabs 22, which serve as page-release icons and permit the rings of the notebook to be opened and closed. In Fig. 1, the rings are closed. When the rings are opened, the user is permitted to lift the top page of the stacked pages and move it about in the desktop display 10. When the notebook metaphor rings 20 are closed, the user can move forward and backward in the notebook. Multiple notebook binder display windows can be opened and pages moved about between the windows. In this way, the graphical user interface of the invention permits a user to directly manipulate the pages in a notebook metaphor and move and share data represented by the pages within the notebook and among multiple notebooks.

More particularly, the graphical user interface display 10 illustrated in Fig. 1 shows that the notebook binder display window 14 has a window frame 24 defining the display window and a title bar 26 identifying the notebook. The title bar includes a window menu icon 28 and a window sizing icon 30. The window frame defines a window working area 32 beneath the title bar, in which the notebook metaphor 16 is displayed. Fig. 1 also shows a cursor or pointer icon 34 in the display 10. As will be familiar to those skilled in the art, the pointer icon can be moved about in the display by using a display mouse device and a display object can be selected by "clicking" a button of the mouse device after the pointer icon has been placed over the object. The display of the top-most page 36 of the pages 18 in the notebook metaphor 16 can be changed by clicking on a page-forward icon 38 or a page-backward icon 40, which cause forward and backward changes, respectively, in the notebook metaphor display.

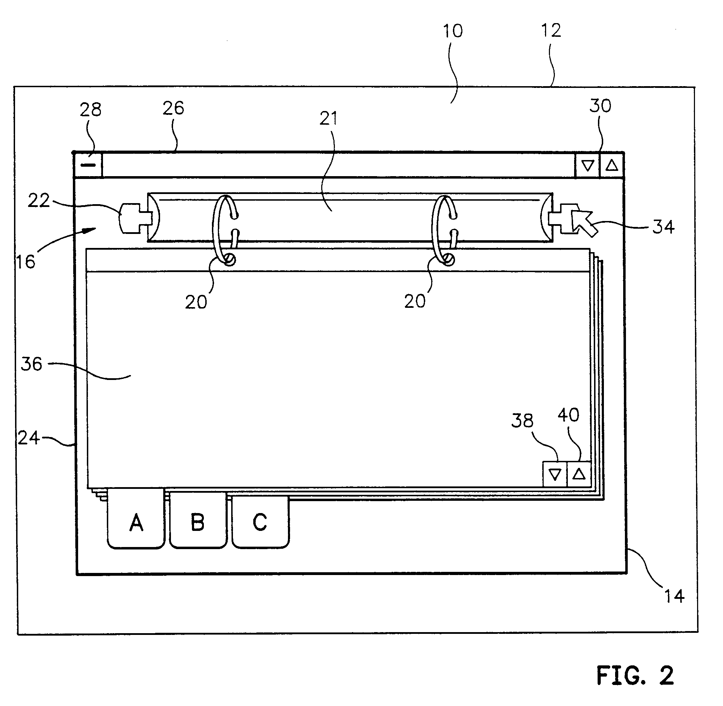

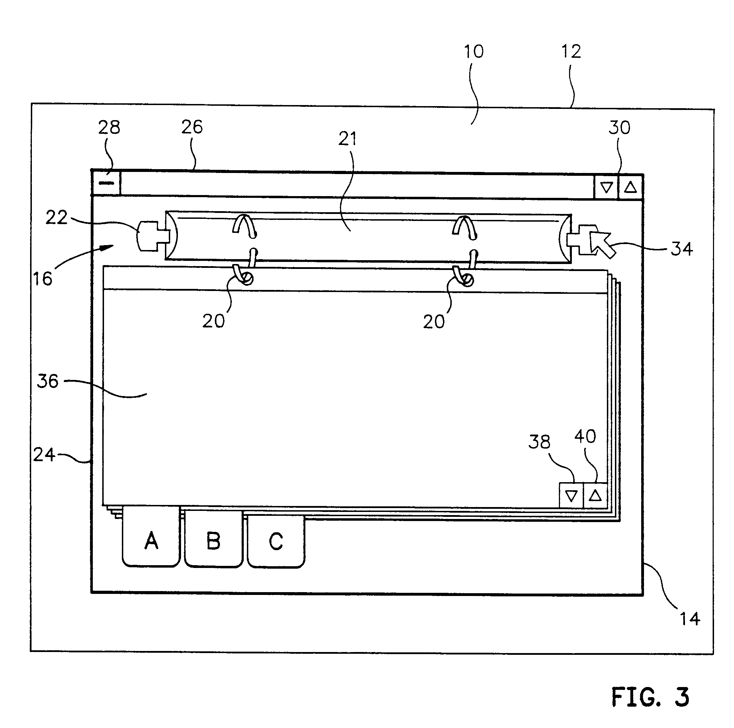

Fig. 2 shows the display 10 after a user has moved the pointer icon 34 in the display so that it touches one of the page release tabs 22. Fig. 3 shows the display 10 after the user has pressed a mouse device button to click on the release tab and thereby change the display so the notebook rings 20 are open. Fig. 2 and Fig. 3 illustrate how the graphical user interface in accordance with the invention changes the notebook metaphor display 10 to show the notebook rings 20 in an open state and in a closed state. As with a conventional notebook, when the notebook rings are open, the pages in the notebook binder metaphor 16 can be lifted out of the notebook.

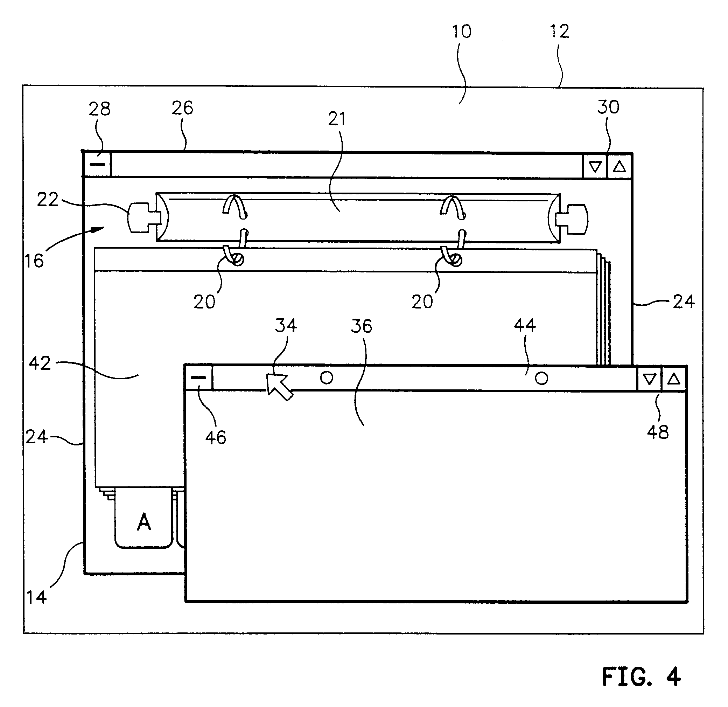

Fig. 4 shows the display 10 when the workstation user has clicked on the top page 36 of the notebook binder metaphor 16 and continued to press the mouse button, thereby permitting the top page to be lifted or "dragged" from the notebook binder metaphor and moved in the display 10. Those skilled in the art will appreciate that the top page 36 can be dragged to any position of the display 10 after it has been clicked on by the workstation user. In Fig. 4, the user has dragged the top page 36 to the right side of the display 10, exposing the next page 42 in the notebook metaphor 16. Fig. 4 shows that the top-most page 36 partially obscures the next page 42 when the top page is moved from the notebook metaphor 16.

Fig. 4 also shows that, when the top page 36 of the notebook metaphor 16 is dragged from the top page position, the notebook page becomes a type of display window. Thus, the appearance of the top page is changed in Fig. 4 as compared to its appearance in Fig. 3 so that it includes a page title bar 44, a page menu icon 46, and a page sizing icon 48. Because the dragged page 36 is a type of window, it extends beyond the window frame 24 of the notebook window 14 to the edge of the display 10.

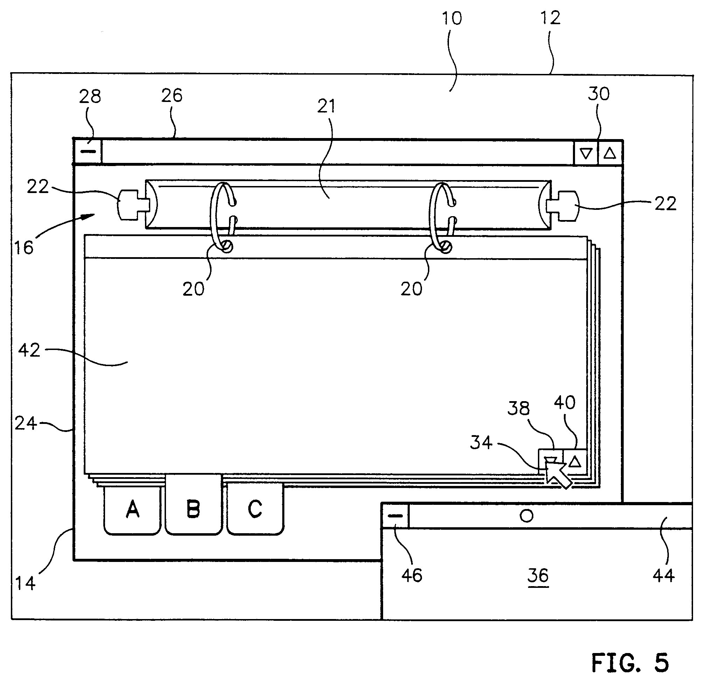

In Fig. 5, the workstation user has moved the top sheet 36 to one corner of the display 10 and has clicked the pointer icon 34 on one of the release tabs 22 of the notebook metaphor 16 to close the notebook rings 20. The user has exposed the page-forward icon 38 by moving the old top sheet 36 of the corner of the display and has clicked on the page-forward icon 38 to advance the pages in the notebook metaphor 16, as indicated by the position of the pointer icon 34 on the page-forward icon. Thus, the notebook is now open at the "B" index tab rather than at the "A" index tab. That is, the "A" index tab has been moved to the bottom of the stack of pages and the "B" index tab has been moved to the top of the stack. Altenatively, the user can click the pointer icon on the desired index tab to move the notebook metaphor to that tab.

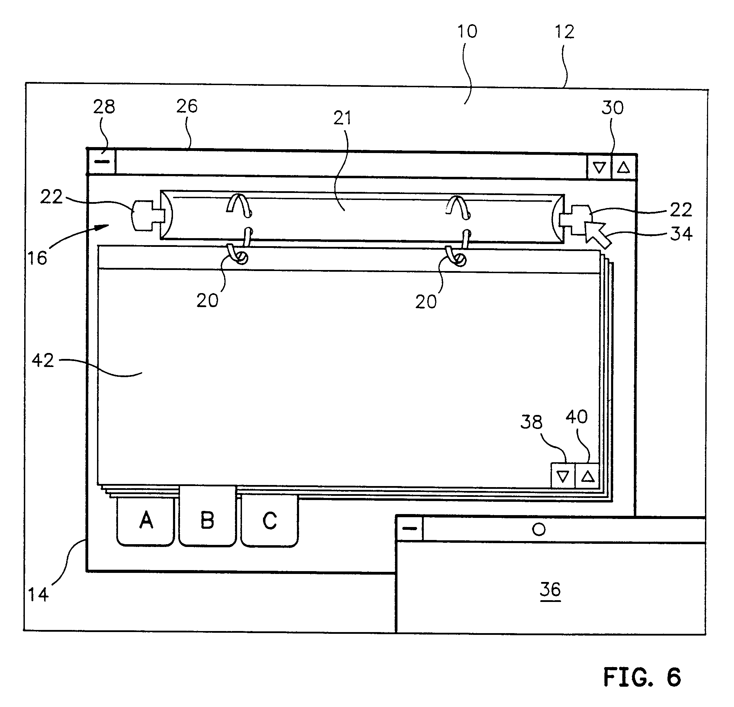

Fig. 6 shows that the workstation user has moved the pointer icon in the display to be on one of the release tabs 22 and has clicked on the release tab, thereby opening the notebook rings 20. Because the user has advanced the pages in the notebook metaphor 16 to a different top-most display page from Fig. 4, the user now has access to a different portion of the notebook metaphor 16.

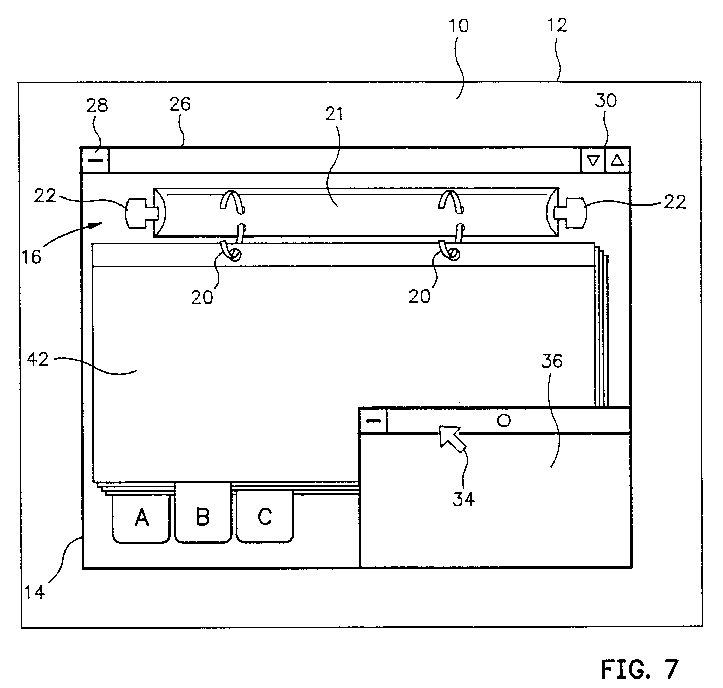

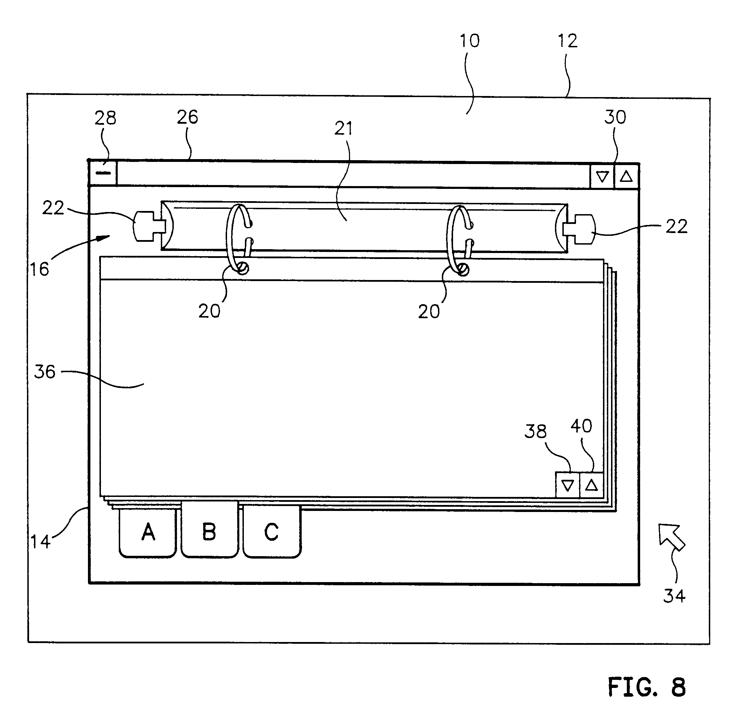

Fig. 7 shows the display 10 after the workstation user has clicked on the top page 36 previously dragged from the notebook metaphor 16 and has held the mouse button down and dragged the page partly to the new location at index tab "B" in the notebook metaphor. Thus, the dragged page 36 has been moved from one index tab location to another. When the workstation user releases the mouse button, the dragged page 36 is released, or dropped, in its new location at index tab "B" and becomes the new top-most page in the display. Fig. 8 shows the notebook display 10 after the dragged page 36 has been released, or dropped, and the notebook rings 20 have been closed. Thus, the pages in the notebook metaphor 16 can again be turned.

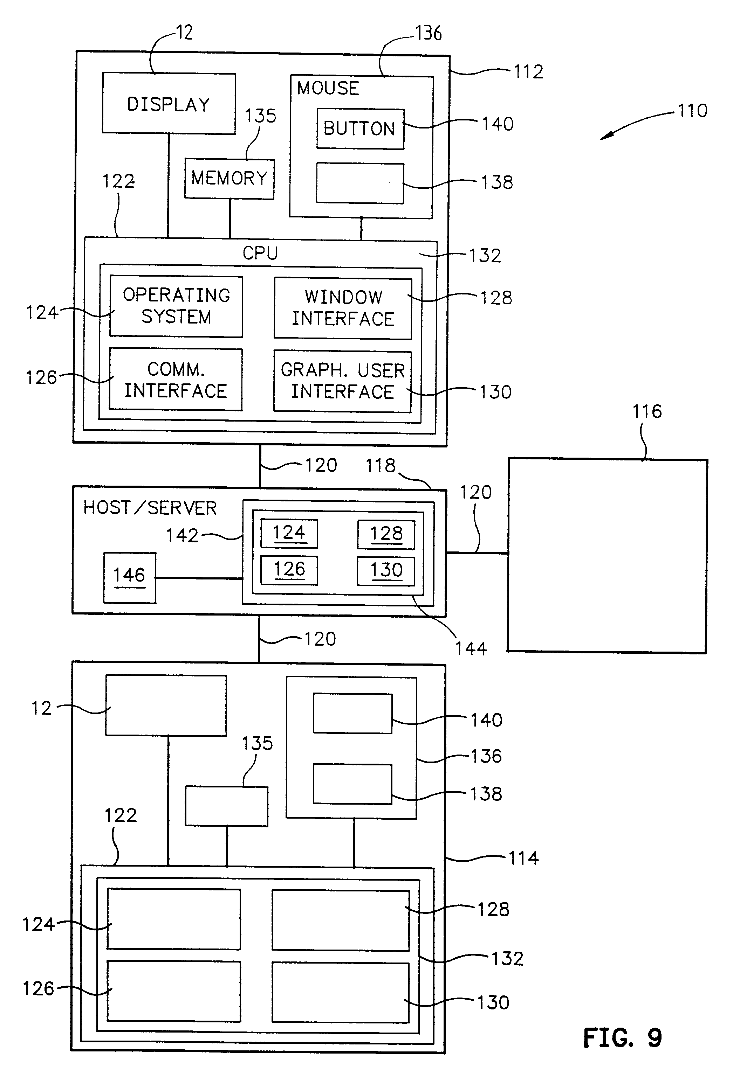

Fig. 9 shows a block diagram of a computing system 110 constructed in accordance with the present invention, in which a plurality of user workstations 112, 114, 116 are connected to a network server 118 or host mainframe computer over a network 120. Although one of the user workstations 112 is shown in greater detail, it should be understood that such details apply to the other workstations 114 and 116 as well. Fig. 9 illustrates that each workstation 112, 114, 116 includes a host central processor unit (CPU) 122.

Each workstation includes a workstation operating system 124, a communication interface 126, a window interface 128, and a notebook graphical user interface 130. The operating system and interfaces can comprise, for example, software routines stored in program memory 132 of the workstation that operate under the control of the CPU. The communication interface permits the users 112, 114, 116 to communicate with each other over the network 120 and can comprise, for example, the well-known industry standard TCP/IP format, the Novell Corporation interface standard, or any of a host of other interface formats that will be known to those skilled in the art. An exemplary window interface can comprise Microsoft Windows by Microsoft Corporation or the Presentation Manager interface of the OS/2 operating system by IBM Corporation. The workstations can comprise, for example, IBM Corporation Model RS6000 workstations or smaller machines, such as an IBM PC or PS/2 personal computer. Coupled to the workstation CPU are a user input device (such as a keyboard 134), the display device 12, a memory unit 135, and a workstation mouse device 136. The memory unit can comprise any of several types of memory, including semiconductor RAM memory, hard disk drives, floppy disk drives, or magnetic tape systems. The notebook binder display window is displayed on the display device 12 as illustrated in Figs. 1-8.

The display mouse device 136 is well-known to those skilled in the art. The mouse includes a position transducer 138, such as a track ball, that provides position information as the mouse device is moved across a flat surface and thereby moves a pointer icon across the display 10. The mouse device 136 also includes at least one mouse button 140 that can be pressed, or clicked, and can be held down continuously to drag objects or icons across the display. For example, when a user at a first workstation 112 user wants to have a top-most page dragged out from a notebook metaphor, the user can position his or her pointer icon 34 on the page and then press and hold down the mouse button 38 to drag the page. The details of the displays corresponding to this action are best explained with reference to the display representations of Figs. 1-8.

The network server or host computer 118 controls communication between the network workstations 112, 114, 116. The network server also can include a central processing unit 142 and operating system 124, communication interface 126, window interface 128, and notebook graphical user interface 130 software routines stored in program memory 144 of the server. Preferably, the network server also includes a data memory 146 that is used to implement a security function. As described further below, the security function permits control over access to copying pages, removing pages, and inserting pages from particular notebook metaphors 16 of the system 110.

To implement the security function, the network server 118 maintains a security password, or access code, in its data memory 146. When a workstation user wants to copy a page, remove a page, or insert a page, the network server either queries the user directly through a password request produced on the workstation display device 12 or checks a workstation identification code. As known to those skilled in the art, each workstation of the system 110 is identified to the network server by a workstation identification code when that workstation is logged on to the network. If the workstation user does not provide a password response that is identical to the password or access code maintained in the server memory 146, or if the workstation identification code is not identical to the password or access code, then the server does not permit the desired page copy, removal, or insertion action to take place. In this way, the ability to change the contents of a notebook metaphor 16 can be controlled. If desired, access to viewing the contents of a notebook metaphor can be controlled in a similar fashion, so that only authorized workstation users can view the pages 18 of a notebook metaphor.

As noted above, the system 110 responds to workstation user interaction with the pointer icon 34 on one of the release tabs 22 of a workstation display device 12 by changing the display 10 to toggle the notebook rings 20 between open and closed states. When the notebook rings are opened, the user is permitted to remove the top page of the stacked pages 18 and drag the page about in the window display. When the notebook rings are closed, the user can turn the pages forward and backward in the notebook metaphor. In this way, the graphical user interface in accordance with the invention permits a workstation user to directly manipulate the pages in the notebook metaphor 16.

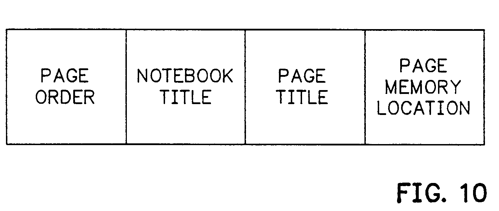

Preferably, the contents of a notebook metaphor 16 are maintained as an ordered table in either the network server memory 146 or in a workstation memory. Fig. 10 illustrates a portion of a notebook page table 148 that can be used to maintain the contents of a notebook metaphor 16. The table preferably includes an entry for each page in the notebook metaphor and includes a variety of data fields. As illustrated in Fig. 10, for example, these fields can include a page order field, which indicates the relative position of the page in the table and therefore in the stack of pages, a notebook metaphor title or identifier, a page title or identifier, and a page memory location. The page order field can comprise, for example, a page number of the page in the notebook metaphor. The notebook metaphor title corresponds to the title illustrated in the title bar 26 of the display 10 and the page title corresponds to the title illustrated in the title bar 44 of the page. The page memory location can correspond to the location in memory where the contents of the page are stored. These contents are retrieved when the page becomes the top page of a notebook metaphor and are displayed on the display device 12.

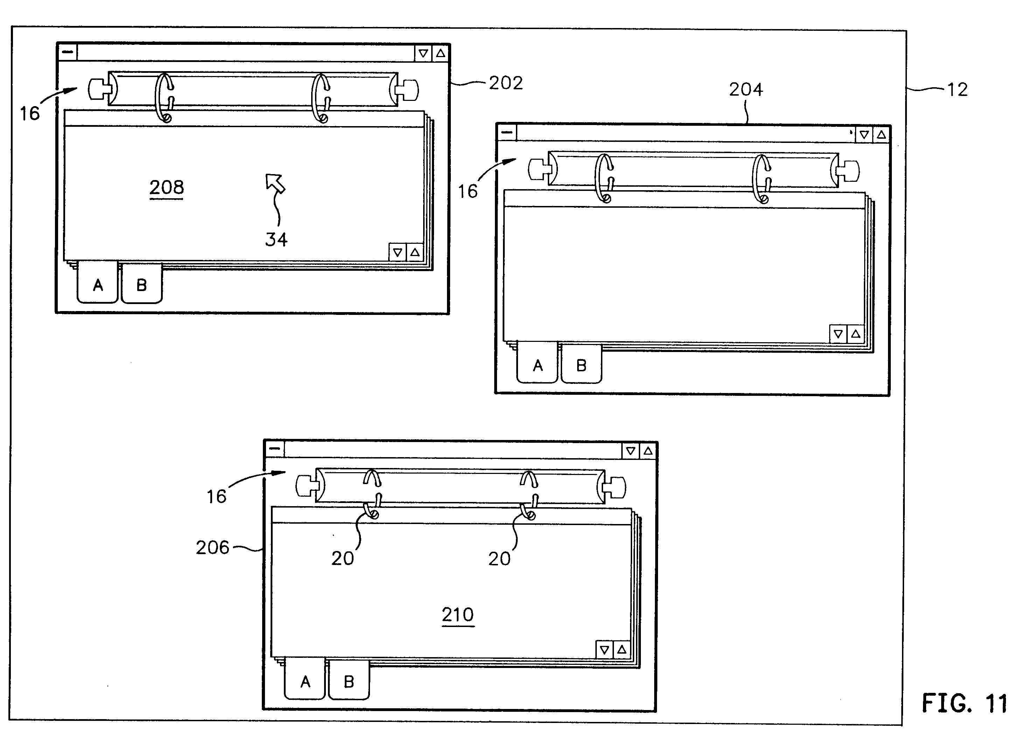

In addition to displaying a notebook metaphor 16 as illustrated in Figs. 1-8, the computing system 110 illustrated in Fig. 9 also can display multiple notebook metaphors. Fig. 11 shows a display 10 having three notebook windows 202, 204, 206, each containing a notebook metaphor 16 similar to the notebook metaphor illustrated in Figs. 1-8. Thus, each notebook window 202, 204, 206 includes a window frame 24 defining the display window and a title bar 26 having a menu icon 28 and a window sizing icon 30, with a window working area 32 in which the notebook metaphor 16 is displayed. Again, the display 10 includes a pointer icon 34 that the workstation user can move about in the display among the notebook windows by using the mouse pointer device 128 illustrated in Fig. 9. It is to be understood that three notebook windows are shown in Fig. 11 for purposes of illustration and that a lesser and greater number of notebook windows can be displayed by the system.

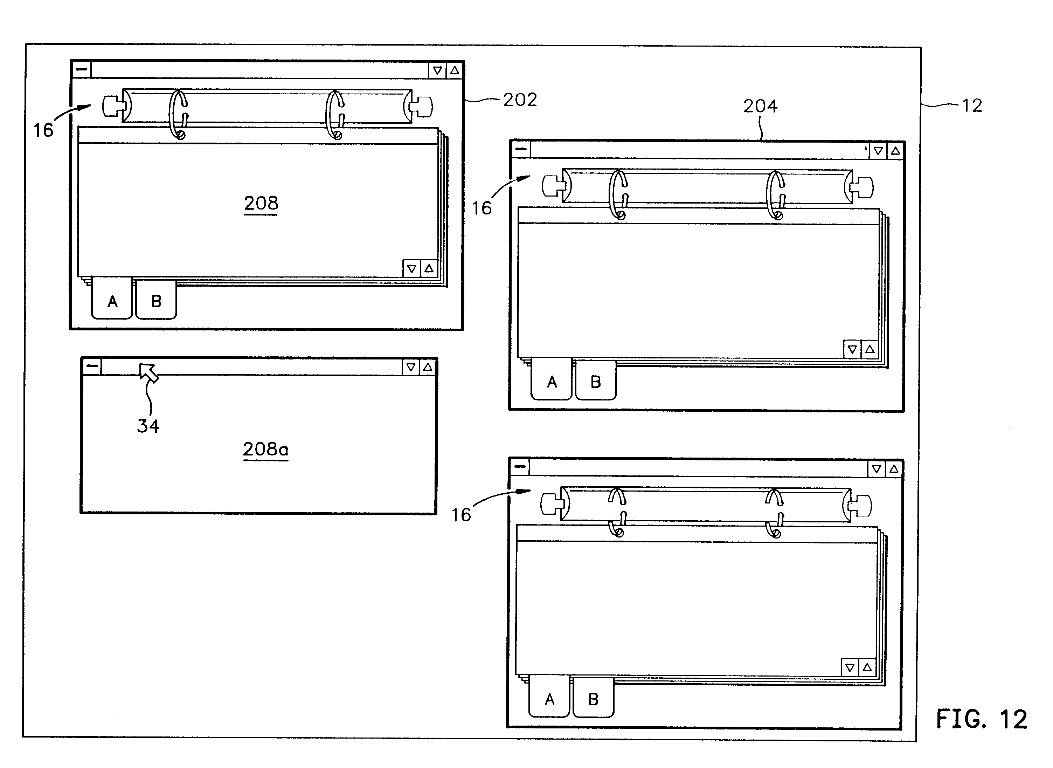

Fig. 12 illustrates the copy function of the system 110, which also is implemented by the graphical user interface with the single notebook display such as illustrated in Figs. 1-8. In particular, if the notebook rings 20 of a notebook metaphor 16 are closed and the pointer icon 34 is placed on a top sheet 208 of the metaphor and then is selected with the mouse device, then the system will create a copy of the top sheet, which then can be moved about the display 10 as described above. Thus, in Fig. 12, the top sheet 208 of the notebook metaphor 16 in the first notebook window 202 has been clicked on without opening the notebook rings 20. When the user clicks on the top sheet, the system alters the size, highlights, or otherwise changes the appearance of the top sheet and generates a copy 208a of the top sheet. In Fig. 12, the copied sheet 208a has been dragged from the notebook metaphor 16 and is shown slightly displaced from the notebook metaphor, for clarity.

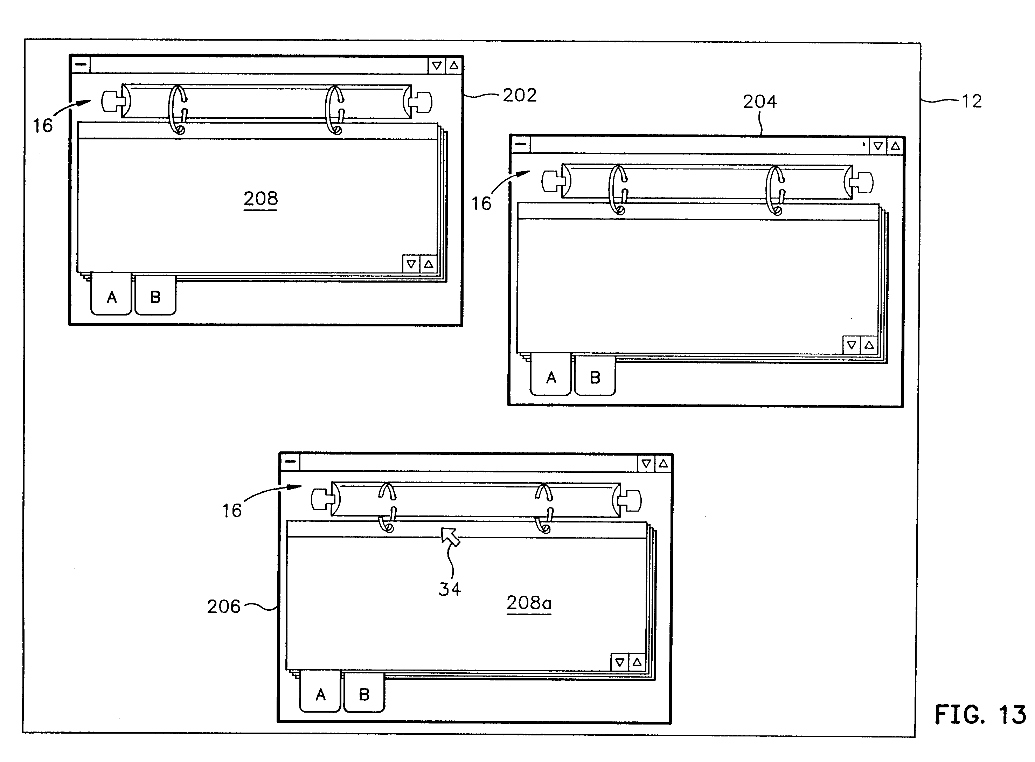

Once a page has been copied, it can be moved about to other notebook windows in the manner described above. Thus, in Fig. 13, the copied notebook page 208a has been dragged to the notebook metaphor 16 of the third notebook window 206. When the workstation user releases the mouse button with the page 208a over the third notebook, the page 208a is dropped in place. The notebook rings 20 of the notebook metaphor in the third notebook window 206 can then be closed and the pages turned, as described above.

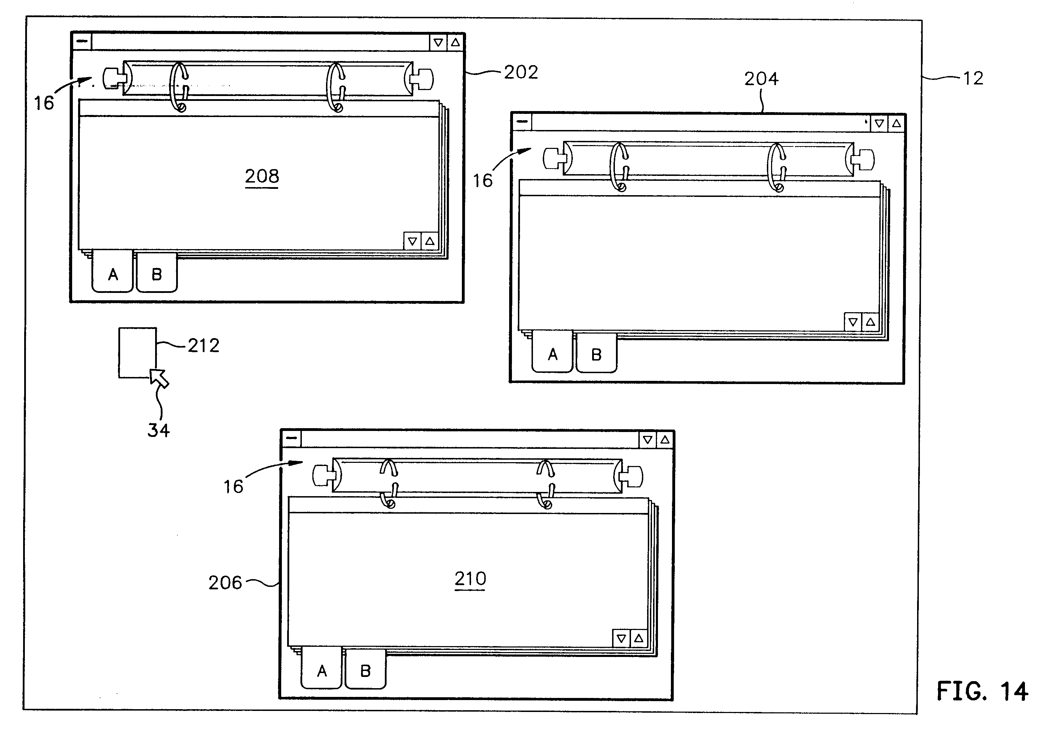

In an alternative embodiment of the system 110, a page that is copied or otherwise lifted from a notebook metaphor is reduced in size to appear as a page icon, which can be easier to move about in the display 10. Fig. 14 illustrates the page icon feature within the context of the multiple notebook display such as illustrated in Fig. 11. In Fig. 14, the top page 208 of the notebook metaphor 16 in the first display window 202 has been removed from the notebook and therefore has been changed in the display 10 to be a page icon 212. Fig. 14 shows that the page icon is reduced in size from the pages in the notebook metaphors. This enables many more sheets to be removed from various notebooks and placed for ready access within the display 10.

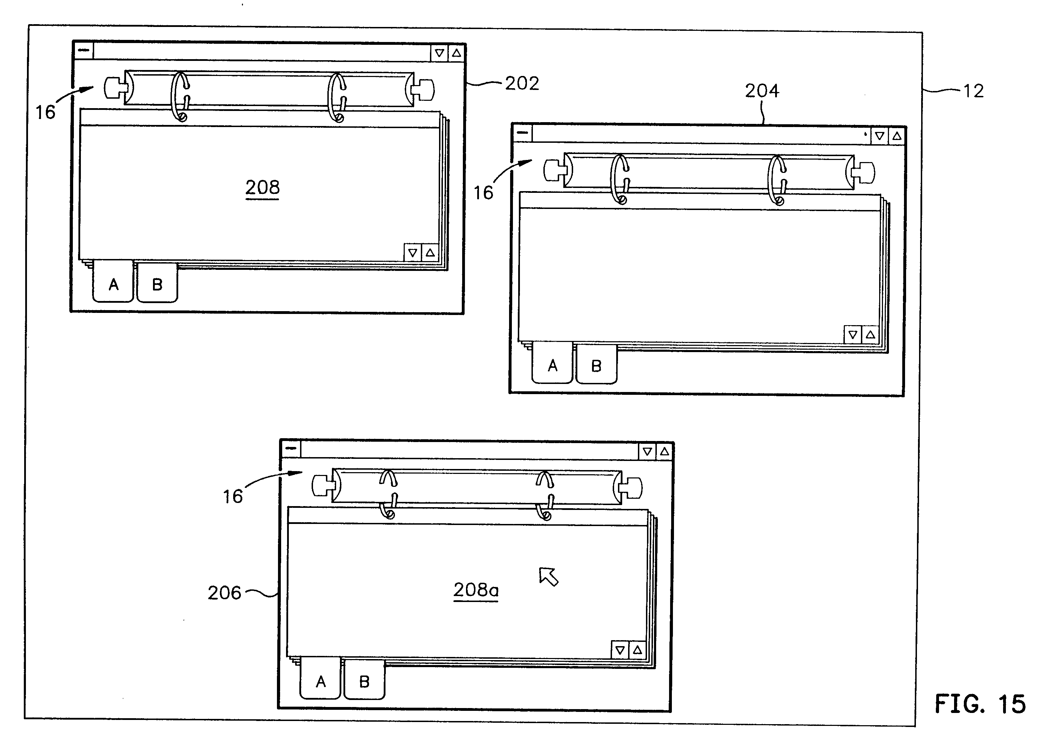

Fig. 15 shows the display 10 after the icon has been dragged to the notebook metaphor 16 of the third notebook window 206 and dropped. That is, Fig. 15 shows that, when the page icon is dropped from the pointer icon 14 by releasing the mouse button, the icon is expanded back to the full size of the page. As in the case of Fig. 13, the notebook rings 20 of the notebook metaphor in the third display window 206 can now be closed and the pages turned.

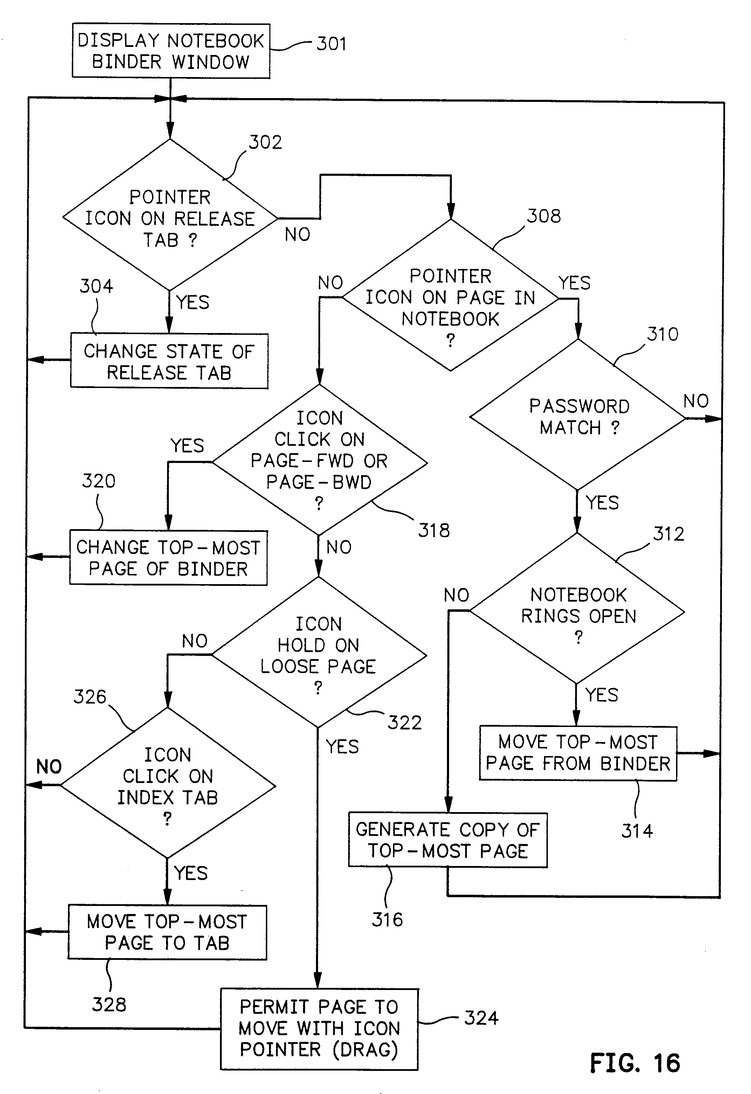

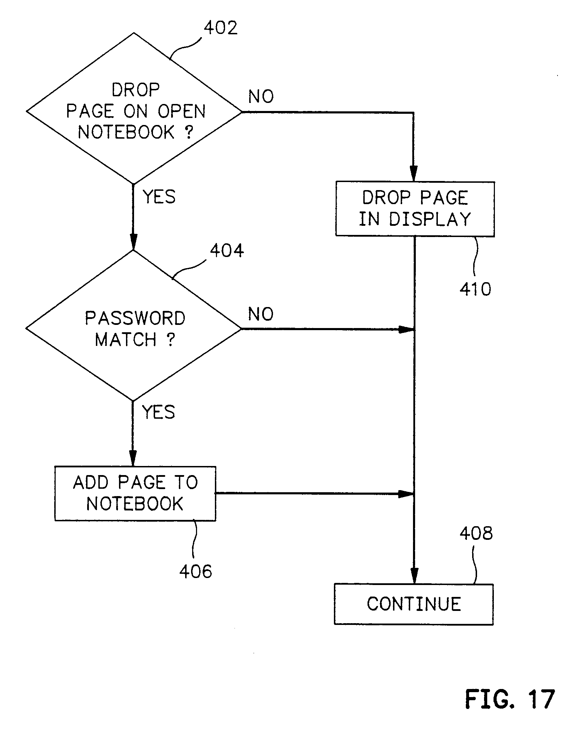

The operation of the system 110 can be better understood with reference to the flow diagrams of Figs. 16 and 17. In Fig. 16, the system processing for mouse button activation is illustrated. Initially, at the flow diagram box numbered 301, processing begins with display of the notebook binder window. Next, when the system detects a mouse button activation, the system checks to determine if the pointer icon 34 has been positioned over one of the release tabs 22. This is indicated by the decision box numbered 302. If the pointer icon was positioned over a release tab, an affirmative outcome at the decision box 302, then at box 304 the system will change the release tab state from open to closed or from closed to open. The system then continues processing, as indicated by the return arrow to the input of decision box 302. If desired, operating the release tab can be subject to the user being granted a security password (described above).

If the system determines that the mouse click was not on one of the release tabs 22, a negative outcome at decision box 302, then processing proceeds to decision box 308, where the system determines if the mouse click was on a page in a notebook metaphor 16. As noted above, a security password feature can be optionally provided. If the feature is provided and if there is an affirmative response at decision box 308, then at decision box 310 the system next determines if the workstation user password matches the security password, maintained in memory. If there is no match, then processing returns to the input of box 302. If there was a match, then at box 312 the system checks to determine if the notebook rings are open.

If the notebook rings are open, then the system permits the user to lift and move the clicked, top-most page from the notebook metaphor, as indicated by box 314. The page then is deleted from the collection of pages in the notebook metaphor. Alternatively, the system can wait until a page is dragged from a notebook and dropped before the page is deleted from a page collection. Processing then returns to the first decision box 302. If the notebook rings were not open, a negative outcome at decision box 312, then at box 316 the system implements the copy function and generates a copy of the top-most page. Processing then returns to the first decision box 302.

If the system determined that the mouse click was not on a page in a notebook metaphor, a negative outcome at decision box 308, then the system next checks at decision box 318 to determine if the mouse click was on the page-forward icon or the page-backward icon. At the flow diagram box numbered 320, the system has determined that the mouse click was on either the page-forward or page-backward icon and therefore moves the notebook metaphor display forward or backward one page, respectively. Processing then resumes at the first decision box 302. Next, at decision box 322, the system checks to determine if the mouse click was on a loose page in the display 10. If the click was on a loose page, then at box 324 the system permits the user to drag the page. Lastly, if the system determines that the mouse click was on an index tab as indicated by decision box 326, then the notebook metaphor display is changed to open at the index tab, as indicated by flow diagram box 328. Processing then resumes at the first decision box numbered 302.

Fig. 17 illustrates the processing when a page being dragged is released. In Fig. 17, the system first detects the release of a dragged page at the decision box numbered 402. As noted above, a security password feature is optional for the system. Thus, if the page was released over an open-ring notebook, an affirmative outcome at box 402, and the security password feature is provided, then at box 404 the system checks for a password match. If the user password matches the security password, then at box 406 the dragged page is added to the notebook. Processing proceeds to the continue box 408 and then returns to the input of the first decision box 402. If the page was not released over an open-ring notebook, a negative response at the first decision box 402, then the system permits the user to drop the page at a new location without restriction, as indicated at box 410, before continuing processing at box 408.

The processing of the system may be further understood with reference to the following pseudocode, in which the following definitions are used:

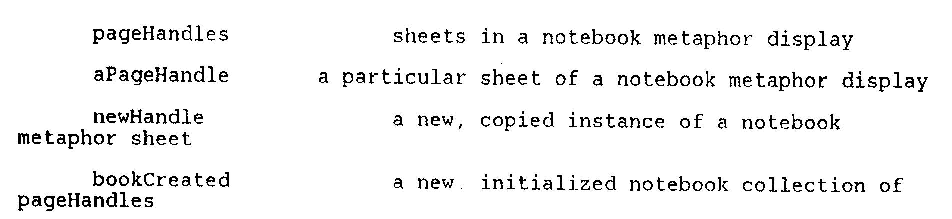

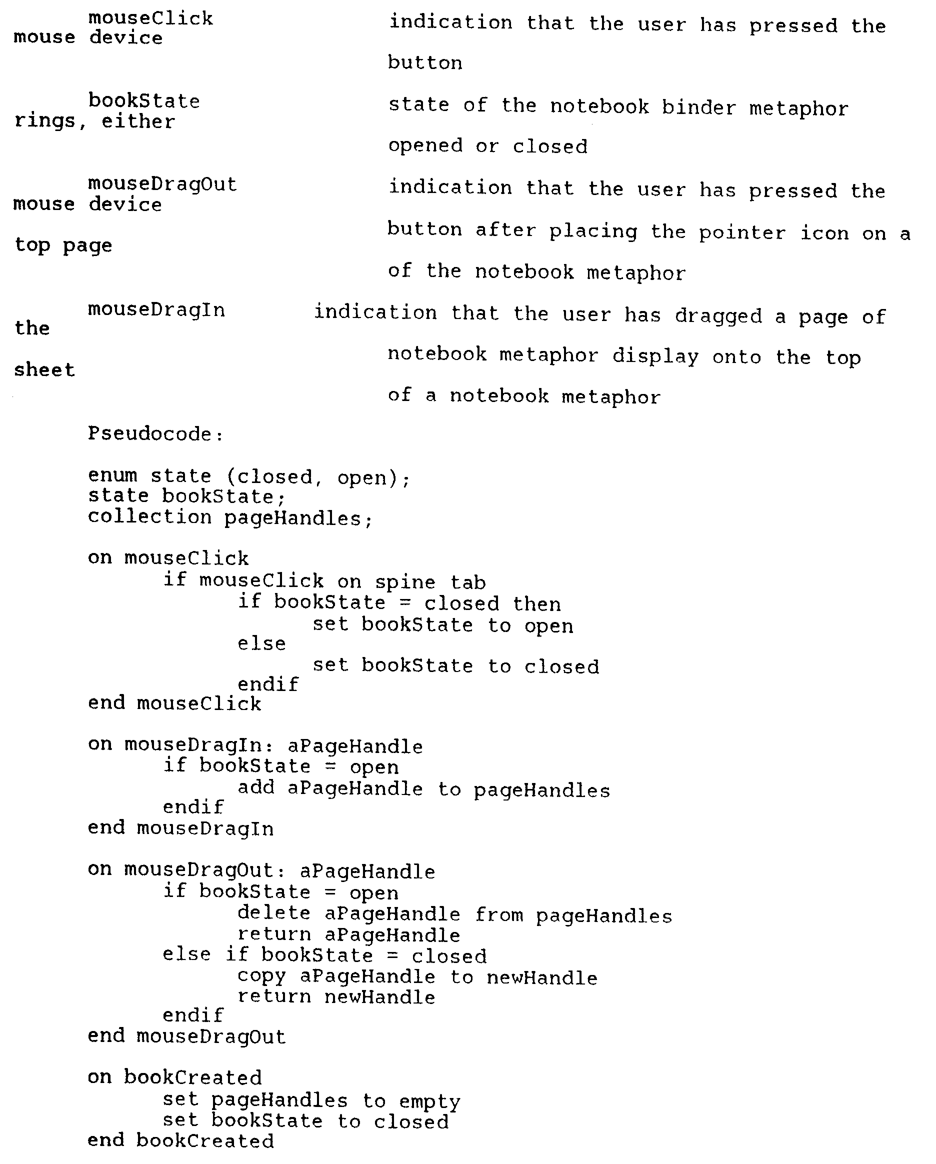

In the pseudocode listed above, the enumerated state conditions are "closed" and "open", which refer to the state of the variable bookState. A collection is defined called pageHandles, which refers to the collection of individual pages in a notebook binder metaphor, individual instances of a page being referred to by the variable name aPageHandle. The next portion of the pseudocode is labeled "mouseClick" and relates to the workstation CPU processing when the CPU detects that the mouse pointer icon is being clicked on an object in the display window. If the pointer icon is clicked on a release tab icon, then if the notebook metaphor binder rings are closed then the state of the rings indicated by the bookState variable is changed to open. The state of the bookState variable otherwise is set to closed to indicate the rings are closed.

The next section of the pseudocode is labeled for "mouseDragIn" and relates to workstation processing for dragging a page of the notebook binder metaphor into a new binder metaphor. If the bookState is set to open, then the dragged page identified as aPageHandle is added to the collection of pages called pageHandles. The next group of pseudocode for "mouseDragOut" refers to the processing when a notebook page is dragged out of a notebook metaphor. If the bookState is set to open (notebook rings are open), then the top-most page called aPageHandle is deleted from the collection of pages. If the binder rings are closed, then the page is copied to a new instance of the page called newHandle.

Lastly, the group of pseudocode instructions labeled for "bookCreated" relates to creating a new instance of a notebook binder metaphor. That is, the last group of pseudocode relates to opening a new notebook binder metaphor. Setting the variable pageHandles to empty indicates that the notebook will not be filled. Setting the bookState to closed relates to the fact that the binder rings of a binder metaphor are closed when the binder metaphor is first created.

As described above, a graphical computer system/user interface provides a window display of one or more notebook metaphors having sheets that are bound together by notebook rings that can be opened and closed. In this way, the graphical user interface permits adding, removing, and changing the order of notebook sheets within a single notebook metaphor and between multiple notebook metaphors. This permits user manipulation of sheets in notebook metaphors and adds to the convenience and user-friendly benefits provided by such graphical user interfaces.

## Claims

1. A method of providing a graphical user interface in a computer workstation system having a workstation central processor unit, a display device that displays objects that can be viewed by a workstation user, and a user-operable display pointing means for interacting with a displayed object of the display device, the method comprising:
displaying a notebook window of the display device, the notebook window having a notebook binder metaphor that includes at least one visible notebook page, a notebook spine having at least one page-holding notebook ring that is displayed in either an open state or a closed state, a page-forward icon, a page-backward icon, and a page-release icon;
responding to workstation user interaction of the display pointing means with the page-forward icon by displaying a next page of the notebook binder metaphor;
responding to workstation user interaction of the display pointing means with the page-backward icon by displaying a previous page of the notebook binder metaphor;
responding to workstation user interaction of the display pointing means with the page-release icon by changing the state of the displayed notebook ring;
responding to workstation user interaction of the display pointing means with the top visible page of the notebook binder metaphor by permitting the workstation user to drag the page to a new position in the notebook window; and
displaying a new top visible page in the notebook binder metaphor when the workstation user has dragged the top visible page to the new position.

2. A method as claimed in claim 1, wherein the step of responding to user interaction with the page-release icon comprises the steps of:
maintaining a security password;
requesting a password from the workstation user;
receiving a password from the workstation user;
comparing the received password with the security password;
changing the state of the displayed notebook ring only if the received password is identical to the security password.

3. A method as claimed in claim 1, comprising the steps of:
responding to user interactior with the page-release icon by changing the state of the notebook ring to a closed state;
responding to user interaction with the page-forward icon or page-backward icon by displaying a next page or previous page, respectively, of the notebook binder metaphor comprising a new top visible page at a new page location of the notebook binder metaphor;
responding to user interaction with the page-release icon by changing the state of the notebook ring to an open state;
permitting the workstation user to retrieve the old top visible page from its position in the notebook window and drag it over the new top visible page at the new location;
responding to user interaction with the page-release icon by changing the state of the notebook ring to a closed state; and
responding to user interaction with the page-forward or page-backward icon by displaying a next or previous page, respectively, of the notebook binder metaphor.

4. A method as claimed in claim 1, comprising the step of responding to workstation user interaction with a top visible page of the notebook binder metaphor when the notebook ring is in a closed state by generating a copy of the top visible page and permitting the workstation user to drag the copy to a new position in the notebook window.

5. A method as claimed in claim 4, wherein the step of responding to user interaction with a top visible page when the notebook ring is in a closed state comprises the steps of:
maintaining a security password;
requesting a password from the workstation user;
receiving a password from the workstation user;
comparing the received password with the security password;
generating a copy of the top visible page only if the received password is identical to the security password.

6. A method as claimed in claim 4, comprising the steps of:
responding to user interaction with the page-release icon by changing the state of the notebook ring to a closed state;
responding to user interaction with the page-forward icon or page-backward icon by displaying a next page or previous page, respectively, of the notebook binder metaphor comprising a new top visible page at a new location of the notebook binder metaphor;
permitting the workstation user to retrieve the page copy and drag it over the new top visible page at the new notebook location; and
responding to user interaction with the page-forward or page-backward icon by displaying a next or previous page, respectively, of the notebook binder metaphor.

7. A method as claimed in claim 1, wherein the display pointing means comprises a workstation display mouse device that controls a selectable display pointer icon and the workstation user interaction with the page-forward icon comprises moving the display pointer icon to the page-forward icon and selecting the page-forward icon.

8. A method as claimed in claim 1, wherein the display pointing means comprises a workstation display mouse device that controls a selectable display pointer icon and the workstation user interaction with the page-backward icon comprises moving the display pointer icon to the page-backward icon and selecting the page-backward icon.

9. A method as claimed in claim 1, wherein the display pointing means comprises a workstation display mouse device that controls a selectable display pointer icon and the workstation user interaction with the page-release tab icon comprises moving the display pointer icon to the page-release icon and selecting the page-release icon.

10. A method as claimed in claim 1, wherein the step of displaying a notebook binder metaphor comprises displaying a plurality of notebook windows, each having a notebook binder metaphor.

11. A method as claimed in claim 10, comprising the step of responding to workstation user interaction with a top visible page of the notebook binder metaphor in a first notebook window when the notebook ring is in a closed state comprises generating a copy of the top visible page in the first notebook window and permitting the workstation user to drag the page copy to a new display position.

12. A method as claimed in claim 11, wherein the step of responding to user interaction with a top visible page of a first notebook binder metaphor when the notebook ring is closed comprises the steps of:
maintaining a security password;
requesting a password from the workstation user;
receiving a password from the workstation user;
comparing the received password with the security password;
generating a copy of the top visible page only if the received password is identical to the security password.

13. A method as claimed in claim 11, comprising the step of permitting the workstation user to drag the page copy to a notebook binder metaphor in a second notebook window.

14. A method as claimed in claim 13, comprising the steps of:
responding to workstation interaction with the page-release tab of the notebook binder metaphor of the second notebook window by changing the state of the second notebook ring to an open state; and
permitting the workstation user to release the page copy over the top visible page in the notebook binder metaphor of the second notebook window and insert the page copy into the second notebook binder metaphor.

15. A method as claimed in claim 14, wherein the step of permitting the workstation user to insert the page copy into the second notebook binder metaphor comprises the steps of:
maintaining a security password;
requesting a password from the workstation user;
receiving a password from the workstation user;
comparing the received password with the security password;
inserting the page copy into the second notebook binder metaphor only if the received password is identical to the security password.

16. A method as claimed in claim 1, wherein the step of displaying a notebook window having a notebook binder metaphor includes the step of maintaining an ordered page collection table having an entry for each page of the notebook binder metaphor.

17. A method as claimed in claim 16, wherein the step of removing the top visible page of the notebook binder metaphor comprises deleting the page entry of the removed page from the page collection table and changing the table ordering to reflect the deletion.

18. A method as claimed in claim 16, comprising the steps of:
responding to user interaction with the page-release icon by changing the state of the notebook ring from an open state to a closed state;
responding to user interaction with the page-forward icon or page-backward icon by displaying a next or previous page, respectively, of the notebook binder metaphor and displaying a new top visible page at a new location of the notebook binder metaphor;
permitting the workstation user to retrieve the old top visible page and drag it over the new top visible page at the new notebook location;
adding a page entry in the page collection table for the old top visible page at the new notebook location; and
responding to user interaction with the page-forward or page-backward icon by displaying a next or previous page, respectively, of the notebook binder metaphor.

19. A method as claimed in claim 16, wherein the step of displaying a notebook window comprises displaying a plurality of notebook windows each having a notebook binder metaphor and maintaining an ordered page collection table for each notebook binder metaphor, wherein each table includes an entry for each page of the respective notebook binder metaphor.

20. A method as claimed in claim 19, wherein the step of removing the top visible page of the notebook binder metaphor comprises deleting the page entry of the removed page from the page collection table and changing the table ordering to reflect the deletion.

21. A method as claimed in claim 20, comprising the steps of:
responding to workstation user interaction with a top visible page of the notebook binder metaphor in a first notebook window when the notebook ring is in a closed state by generating a copy of the top visible page in the first notebook window and permitting the workstation user to drag the page copy to a new display position in a second notebook window;
responding to workstation interaction with the page-release tab of the notebook binder metaphor of the second notebook window by changing the state of the second notebook ring to an open state;
permitting the workstation user to release the page copy over the top visible page in the notebook binder metaphor of the second notebook window and insert the page copy into the second notebook binder metaphor; and
adding a page entry in the page collection table for the second notebook binder metaphor to reflect the insertion in the second notebook window.

22. A computer system comprising:
a workstation central processor unit;
a display device that can be viewed by a workstation user;
mouse means for interacting with a displayed object metaphor of the display device;
a graphical user interface that displays a notebook window containing a notebook binder metaphor on the display device, such that the notebook binder metaphor includes at least one visible notebook page, a notebook spine having at least one page-holding notebook ring that is displayed in either an open state or a closed state, a page-forward icon, a page-backward icon, and a page-release icon; wherein the graphical user interface
responds to workstation user interaction with the page-forward icon by displaying a next page of the notebook binder metaphor,
responds to workstation user interaction with the page-backward icon by displaying a previous page of the notebook binder metaphor,
responds to workstation user interaction with the page-release icon by changing the state of the displayed notebook ring, and
responds to workstation user interaction with the top visible page of the notebook binder metaphor by permitting the workstation user to drag the page to a new position in the notebook window and displays a new top visible page in the notebook binder metaphor.

23. A computer system as claimed in claim 22, comprising a security processor that maintains a security password and halts operation of the graphical user interface upon workstation user interaction with the page-release icon and permits graphical user interface operation to resume only after the security processor confirms that a user-provided password is identical to the security password.

24. A computer system as claimed in claim 23, wherein the graphical user interface permits the workstation user to drag the top visible page to a new position in the notebook window and displays a new top visible page in the notebook binder metaphor only after the security processor permits resumption of interface operation.

25. A computer system as claimed in claim 22, comprising a security processor that maintains a security password and halts operation of the graphical user interface upon workstation user interaction with a top visible page of the notebook binder metaphor when the notebook ring is in a closed state and permits interface operation to resume only after the security processor confirms that a user-provided password is identical to the security password.

26. A computer system as claimed in claim 25, wherein the graphical user interface generates a copy of the top visible page only after the security processor permits resumption of graphical user interface operation.

27. A computer system as claimed in claim 22, comprising a page collection table that is maintained by the graphical user interface and includes an entry for each page of the notebook binder metaphor ordered according to the sequence of pages in the notebook binder metaphor.

28. A computer system as claimed in claim 27, wherein the graphical user interface deletes the page entry of a page from the page collection table when the page is dragged from the notebook binder metaphor by the workstation user interaction.

29. A computer system as claimed in claim 22, wherein the graphical user interface permits the workstation user to drag a page from a position in the notebook window display over a top visible page in a notebook binder metaphor having open notebook rings and release the dragged page, thereby inserting the dragged page in the notebook binder metaphor at the top visible page by adding a page entry in the page collection table.
